# EUROPEAN PATENT SPECIFICATION

(11) **EP 3 025 815 B1**
(45) Date of publication and mention of the grant of the patent: **06.06.2018**
(21) Application number: 15193433.8
(22) Date of filing: 06.11.2015
(51) Int. Cl.: B23D 15/08, B21D 43/28, B23Q 7/12

(54) **METHOD FOR COLLECTION OF CUTTINGS AND PLATE SHEARS**
VERFAHREN ZUM VERSAMMELN VON ZUSCHNITTEN UND BLECHSSCHERMESSER
PROCÉDÉ POUR RECUEILLIR DES COUPES ET CISAILLES

(30) Priority: 26.11.2014 DK 201400685; 10.06.2015 DK 201570355
(43) Date of publication of application: 01.06.2016
(73) Proprietor: HM Machinery A/S, 9460 Brovst (DK)
(72) Inventor: Nielsen, Claus, 9460 Brovst (DK)
(74) Representative: Holme Patent A/S

(56) References cited:
- US-A- 1 920 999
- US-A- 4 150 594
- US-A- 4 422 815

## Description

The invention relates to a method for collection of cuttings according to the preamble of claim 1.

From US patent number 4.422.815 is known a plate shears and a design for sorting of cuttings. The sorting occurs via a complicated tipping table controlled by two actuators and a number of joint connected guiding rods. The sorting mechanism provides possibility of choosing between sending cuttings backwards or forwards in relation to the shears and the insertion direction hereto. But the complexity of the sorting mechanism is significant.

It is furthermore known for plate shears that the cuttings simply fall out of the machine opposite the insertion end and end on the floor, from which the operator must then pick it up.

A plate shears and a method are therefore desirable, whereby it is made possible to achieve sorted cuttings according to length, such that short cuttings end one place and longer cuttings another, since the end point is raised from the floor such that the operator is not to have difficulty with picking cuttings up from the floor. US 4 150 594 discloses a method for collection of cuttings according to the preamble of claim 1. The object of the invention is achieved by a method according to claim 1.

By the method according to claim 1, cuttings, which from front edge to back edge exceed the length L, after cutting off from the plate material, become received by a fixed transverse bearer provided parallel to the upper and under knives but displaced of then predetermined distance L past the upper and under knives. Here, the relationship between the length L and the length L0 as measured from the bearer to the front edge of the cutting will determine if the cuttings tilt over the bearer towards the plate shears' insertion side, or towards the plate shears' rear side. It is caused by the cuttings tilting towards the one of the two sides, where the longest and thereby heaviest part of the cuttings is situated. When the long cuttings and the short cuttings tilt each own way, it becomes possible to sort short from long cuttings. The sorting can thus form basis of further transport to each one of two collection drawers or ledges. The sorting can then occur especially easily and without any moving parts. Cuttings with a length, which is smaller than L, will always be transported towards a collection drawer at the insertion side of the plate shears since they do not get contact with the bearer and cuttings with lengths from L and up to 2xL get contact with the bearer and tilt towards the insertion side since L is here larger than L0 and they are likewise transported towards a collection drawer at the insertion side. Cuttings with lengths, which exceed 2xL tilt towards the rear side since L is here smaller than L0 and they are transported towards a collection drawer at the rear side. Hereby, the operator automatically gets his short cuttings stored in a drawer at the insertion side, where he is already situated, and can easily take the cuttings with him for further processing. The slightly longer cuttings are sent to a drawer for collection at the machine's rear side, where they can equivalently easy be gathered.

In claim 2, it is further stated that it is possible to insert sliding surfaces from the bearer and for example out of the machine. It can be a big advantage when there is to be made large series and the built in drawers are not quite enough. Here, the sliding surface consists of loosely mounted plates, which at an outer end include a fork handle or a u-profile, which can be put down over for example the edge of a pallet or other forms of transport equipment.

For example, the sliding surfaces could be connected to an ordinary conveyor or a mechanical stacker.

Claim 3 includes the built in collection drawers' design, where there is especially thought of the further transport of the cuttings out of the drawer. It is prescribed in the claim that the further transport includes manual mesh with the edge of the cuttings where a user leads his hand or his fingers in between the plate and the collection drawer's bottom and lifts the plate out of the collection drawer. In order to ease the lifting, the collection drawer has, at both the insertion side and the rear side, a plane bottom neighboring upon the transport surface, where the bottom proceeds in an angle in relation to the transport surface. Hereby, it becomes possible for an operator to get his fingers in between the cutting and the bottom of the drawer. Appropriately, there is also an upright end stop in connection to the bottom, whereby it is ensured that a cutting cannot just fall out and down on the floor.

As stated in claim 4, the cutting will, when it follows the transport surface to a collection drawer at the insertion side of the plate shears, pass across a motor and a driving design for driving of at least one of the knives in the plate shears. There is typically, at this type of plate shears, not any free passage possible across the motor since it is placed close to the knives. According to the invention, the passage across the motor is only possible by the motor being placed low far below the knives.

The mentioned transport surfaces can specifically be designed as simple slanted surfaces, where gravity puts the cuttings in movement forwards towards the lowermost end of the slanted surface. Alternatively, one can use surfaces with embedded wheels or rolls, possibly with electrical drive. This is complicated and relatively expensive, on the other hand, the surfaces must not maintain a minimum of inclination in order to get the transport of cuttings across the surface to occur and it will also be possible to make transport in turns the one and the other direction on the same transport surface.

The invention will now be explained more fully with reference to the drawings, on which:
Fig. 1. shows a sectional image of a plate shears in relation to known technique,
Fig. 2 shows an image of the plate shears in fig. 1 seen from the front, however with a front panel removed such that the inner parts are visible,
Fig. 3 shows a sectional image of a plate shears according to an embodiment of the invention,
Fig. 4 shows an embodiment of the plate shears in relation to the invention in a 3d depiction,
Fig. 5 shows a loose sliding surface according to an embodiment of the invention and

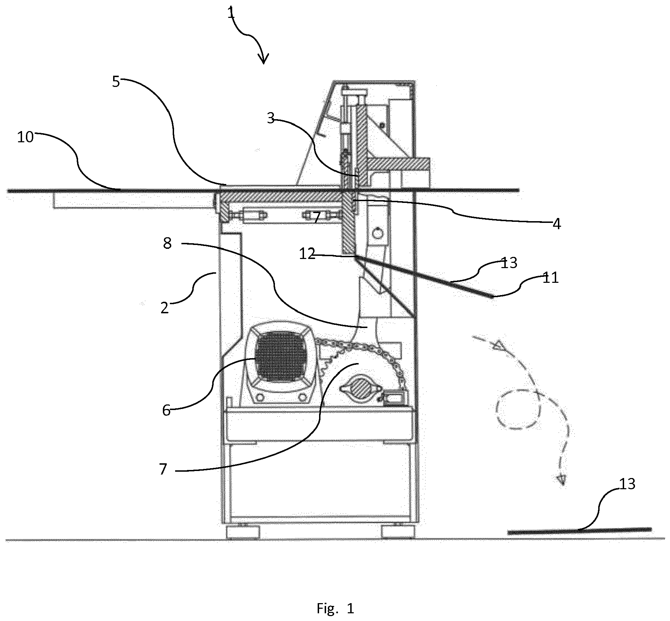

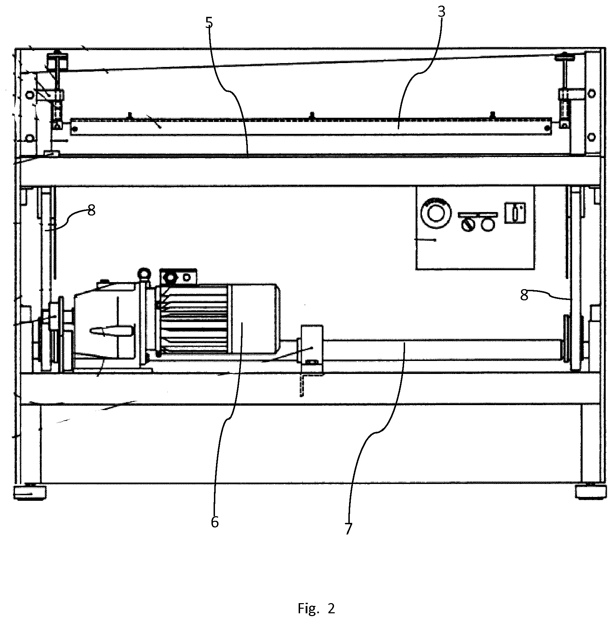

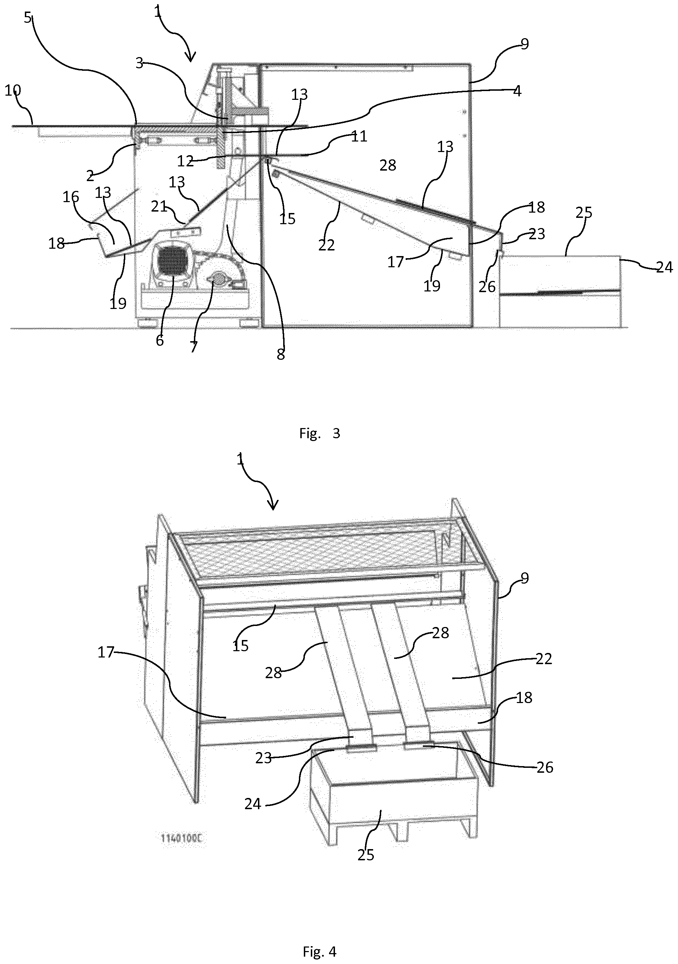

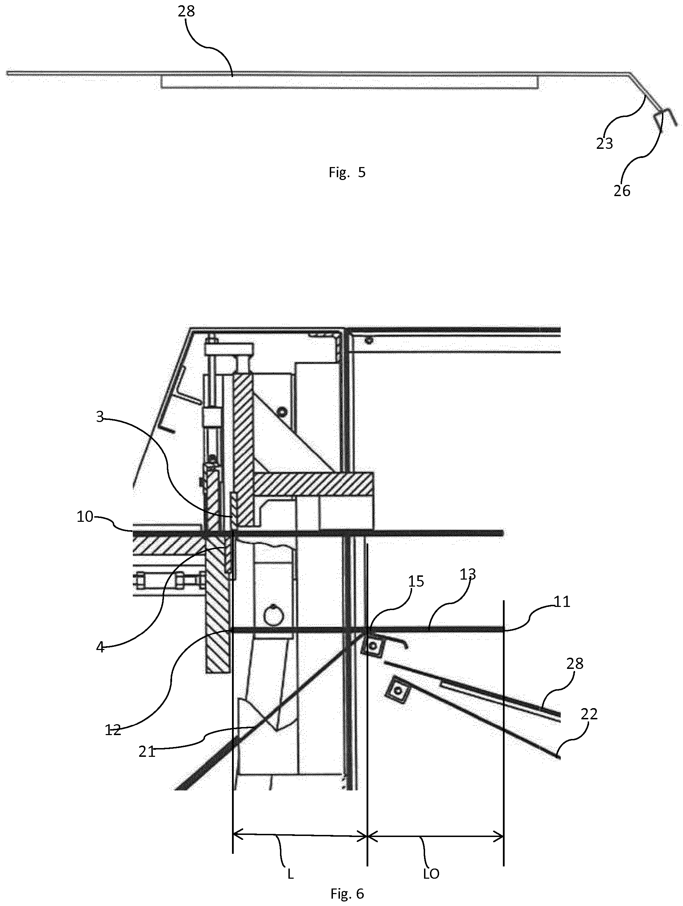

Fig. 6 is a magnified section of the plate shears shown in Fig. 3. Fig.1 shows a plate shears 1, where the plate material 10 is inserted horizontally along a cutting table 5 with a front edge in front. The insertion always occurs at an insertion side 2 of the plate shears 1 such that the plate material 10 comes in between an upper knife 3 and a lower knife 4. Fig. 1 and 2 show how a motor 6 and a driving design 7 are provided below the cutting table 5 and includes at least one driving rod 8 for movement of upper and under knife 3,4 past each other to shear cuttings of the plate material 10 along a rear edge 12 of a cutting 13. As it appears from Fig. 1, the cuttings 13 will fall out of the machine and end on the base the machine is placed on. Here, the operator must then get it. Plate shears of this type are typically used in machine shops and for smaller productions, and will usually be manually operated such that an operator goes to the insertion side 2 and feeds a plate, activates the motor and subsequently collects his cuttings 13. It is time consuming and fatiguing for the operator to having to move himself around the machine and also collect the cuttings from its flat lying position on the floor behind the machine.

As shown in Fig. 3, according to the invention there is mounted a transverse bearer 15 parallel to the upper and lower knives 3,4 and displaced in an insertion direction past the upper and lower knives 3,4 a predetermined distance L, as indicated on Fig. 6. It means that the cutting 13, if it is longer than the distance L, will tilt over the bearer 15, when it is cut free, such that either the front edge 11 tilts downwards and the rear edge 12 upwards, or the rear edge 12 tilts downwards and the front edge 11 upwards. This difference in tilting movement is useful for sorting of cuttings 13 in long and short pieces, and the non sorted pieces can subsequently be transported automatically to each one's collection drawer. This gives many advantages for the operator, especially if at least one of the collection drawers is mounted at the plate shears' 1 insertion side 2, where the operator is already situated.

The bearer's functions are additionally described in the following with reference to Fig. 6, which shows a magnified section of Fig. 3. In the figure is shown a cutting 13 placed on the bearer 15 and the distances on the cuttings from the bearer 15 to the cutting's front edge 11 and rear edge 12 are indicated with respectively L0 and L. Cuttings 13, which exceed the length L after cuttings from the plate material become received by the bearer 15, since the relationship between the length L and the length L0 determines if the cuttings tilt over the bearer 15 towards the plate shears' insertion side 2 or towards the plate shears' rear side 9, since the cuttings 13 tilt towards the one of the two sides, where the longest and thereby heaviest part of the cuttings is situated. Cuttings 13 with a length, which is smaller than L, will always be transported towards the collection drawer 16 at the insertion side 2 of the plate shears 1 since they do not get contact with the bearer 15. Cuttings 13 with a length of up to 2xL get contact with the bearer 15 and tilt towards the insertion side 2 since L is here larger than L0 and they are transported towards the collection drawer 16 at the insertion side 2. Cuttings with lengths, which exceed 2xL tilt towards the rear side 9 since L is here smaller than L0 and they are transported towards a collection drawer 17 at the rear side 9.

Cuttings of the length 2xL can in principle stay and balance on the bearer 15 and subsequently it will not be possible to predict to which side they will tilt. If this is found to be a problem, it is a simple matter to make the bearer 15 displaceable. For example, it can be placed in a gate guide in each side, such that it can be pulled forwards or backwards in relation to the shears' knives or it can be embedded swiveling around a point, which is situated slightly below its upwards facing receiving surface, such that it can be swung between several different fixed stops, for example a fixed stop closer to the knives and a fixed stop further away from the knives and a fixed stop right in the center of this. Then, the operator can choose if cuttings with the length 2xL should go in the one or the other collection drawer. These possibilities are not illustrated in the figures and will obviously make the machine shears more complicated and thereby also more expensive.

The transport from the bearer 15 and down towards the respective drawers occurs by the cuttings sliding down each own slanted transport surface 21,22, as shown in Fig. 3 placed in connection to the bearer. The transport surface 21, which slopes in direction towards the plate shears' insertion side 2, passes across the motor 6 and the driving design 7. This is made possible since motor 6 and driving design 7 are placed lowermost in the machine and close to the floor the machine is placed on.

As it appears from Fig. 3, there is an additional transport surface 22, which slopes in direction towards a rear side 9 for the plate shears 1. Here is not a motor to take into consideration, so this transport surface 22 has a little more slope in relation to horizontal, so slipping of the cuttings along this surface is promoted.

At the end of each transport surface 21,22 is provided a collection drawer 16, 17 such that a larger number of cuttings 13 can be collected in it and taken out by an operator. The drawers 16,17 are placed above the floor height, such that the operator must not get cuttings from the floor height, one can settle for going slightly down in the knees for the collection. Each of the two drawer bottoms are angled in relation to the belonging transport surfaces 21,22 and in connection to each drawer's bottom 19, there is placed an upright end stop 18. The bottom 19 of the drawers is angled, as shown, which results in that there occurs a free space between cuttings 13 and the bottom 19, which means that an operator can easily get hold around a cutting for removal from the drawer.

As it is seen in Fig. 3, the motor and the driving design for execution of the movement of the knives are provided below the two knives and as stated, the transport surface, which slopes in direction towards the plate shears' insertion side is led across the motor and the driving design since however the driving rod 8 passes along one or each own end of the knives. Since the motor 6 is placed low in the machine, the driving rod 8 is similarly longer, but the eccentric in the driving design 7 has a center position, which entails that the machine in kinematic regard is not different from previously known machines of this type. This means that the knives' movement is unchanged in relation to previously, even though the driving design has changed place.

In Fig. 4 it is shown how two loosely mounted gliding surfaces 28 are mounted between the bearer 15 and a collection pallet 25. The pallet 25 is placed behind and outside of the plate shears 1. Since the transport surface 22 towards the drawer at the back 17 has larger slope than required, the sliding surfaces 28 can be used even though they at the insertion have a somewhat smaller slope, since they, in order to be able to stretch themselves out of the plate shears, must pass across the rearmost drawer's end stop 18. These sliding surfaces 28 are shown in Fig. 3 and also in Fig. 5. At the rearmost end they each include a downwards facing fold 23 with a fork shaped piece 26, which is designed to grip around the uppermost pallet edge 24. The sliding surfaces 28 can easily be mounted as needed, for example when larger series of cuttings are to be produced. It is a big advantage of the plate shears according to the invention that an operator can create shorter cuttings for reception in the frontmost drawer while the sliding surfaces are mounted without having to readjust the machine in any way. This provides high flexibility in relation to conventionally known plate shears.

| | |
|---|---|
| plate shears | 1 |
| insertion side | 2 |
| upper knife | 3 |
| under knife | 4 |
| cutting table | 5 |
| motor | 6 |
| driving design | 7 |
| driving rod | 8 |
| rear side | 9 |
| plate material | 10 |
| front edge of cuttings | 11 |
| rear edge of cuttings | 12 |
| cuttings | 13 |
| transverse bearer | 15 |
| collection drawer at the insertion side | 16 |
| collection drawer at the rear side | 17 |
| end stop | 18 |
| drawer bottom | 19 |
| transport surface, which slopes towards the insertion side | 21 |
| transport surface, which slopes towards the rear side | 22 |
| downwards facing fold | 23 |
| pallet edge | 24 |
| collection pallet | 25 |
| fork shaped piece | 26 |
| the sliding surfaces | 28 |

## Claims

1. Method for collection of cuttings (13) of plate material (10) from a plate shears (1) where the plate material's front edge (11) is inserted from an insertion side (2) of the plate shears (1) between an upper knife (3) and an under knife (4), which are subsequently moved past each other for cutting of the plate material (10) along a rear edge (12) of the cuttings (13) wherein cuttings (13), which from front edge (11) to back edge (12) exceed a length L, after cutting, become received by a fixed transverse bearer (15) provided parallel to the upper and under knives (3,4) but displaced of the predetermined distance L past the upper and under knives (3,4), wherein the relationship between the length L and a length L0 of the cutting determines if the cuttings (13) tilt over the bearer (15) towards the plate shears' insertion side (2), or towards the plate shears' rear side (9), since the cuttings (13) tilt towards the one of the two sides where the longest and thereby heaviest part of the cuttings is situated, and wherein L0 is measured from the bearer (15) and to the front edge (11) of the cuttings (13), measured on the cuttings (13) when it hits the bearer (15), **characterized in that** cuttings (13) with a length, which is smaller than L, are always transported towards a collection drawer (16) at the insertion side (2) of the plate shears (1) since they do not get contact with the bearer (15) and that cuttings (13) with lengths from L and up to 2xL get contact with the bearer (15) and tilt towards the insertion side (2) since L is here larger than L0 and is transported towards a collection drawer (16) at the insertion side (2) and that cuttings (13) with lengths, which exceed 2xL tilt towards the rear side (9) since L is here smaller than L0 and is transported towards a collection drawer (17) at the rear side (9).

2. Method, according to claim 1, **characterized in that** the cutting (13), when it is moved towards the rear side (9) of the plate shears (1) follows either fixed transport surfaces (22) towards the collection drawer (17) at the rear side (9) or alternatively follows loosely mounted sloping sliding surfaces (28) inserted between the bearer (15) and a collection pallet (25), which is set up behind the machine shears (1).

3. Method, according to claim 1, **characterized in that** the further transport out of a collection drawer (16,17) includes manual mesh with the edge of the cuttings (13) where a user leads his hand or his fingers in between the cuttings (13) and the collection drawer's bottom (19) and lifts the plate out of the collection drawer (16,17), since the collection drawer, at both the insertion side (2) and the rear side (9), includes a plane bottom (19) neighboring upon a transport surface (21,22), where the bottom (19) proceeds in an angle in relation to the transport surface (21,22) and an upright end stop (18) in connection to the bottom (19), whereby a space is provided between the bottom (19) and the cuttings (13) to the manual mesh.

4. Method, according to claim 1, **characterized in that** the cuttings (13), when it follows the transport surface (21) to a collection drawer (16) at the insertion side (2) of the plate shears (1), pass across a motor (6) and a driving design (7) for driving of at least one of the knives in the plate shears (1).

## Patentansprüche

1. Verfahren zum Sammeln von abgeschnittenen Stücken (13) aus Plattenmaterial (10) von einer Plattenschere (1), bei dem die Vorderkante (11) des Plattenmaterials von einer Einführungsseite (2) der Plattenschere (1) her zwischen ein oberes Messer (3) und ein unteres Messer (4) eingeführt wird, die danach aneinander vorbeibewegt werden, um das Plattenmaterial (10) entlang einer Hinterkante (12) der abgeschnittenen Stücke (13) zu zerschneiden, wobei die abgeschnittenen Stücke (13), die von Vorderkante (11) zu Hinterkante (12) eine Länge L nach dem Schneiden übersteigen, von einem festen Querträger (15) aufgenommen werden, der parallel zu dem oberen und dem unteren Messer (3, 4) vorgesehen, aber um den vorbestimmten Abstand L hinter dem oberen und dem unteren Messer (3, 4) versetzt ist, wobei das Verhältnis zwischen der Länge L und einer Länge L0 der abgeschnittenen Stücke bestimmt, ob die abgeschnittenen Stücke (13) über den Träger (15) zu der Einführungsseite (2) der Plattenschere hin oder zu der Rückseite (9) der Plattenschere hin kippen, da die abgeschnittenen Stücke (2) zu einer der zwei Seiten hin kippen, wo sich der längste und daher schwerste Teil der abgeschnittenen Stücke befindet, und wobei L0 von dem Träger (15) bis zu der Vorderkante (11) der abgeschnittenen Stücke (13) gemessen wird, gemessen an den abgeschnittenen Stücken (13), wenn es auf den Träger (15) aufschlägt, **dadurch gekennzeichnet, dass** abgeschnittene Stücke (13) mit einer Länge, die kleiner als L ist, immer zu einem Sammelfach (16) auf der Einführungsseite (2) der Plattenschere (1) hin transportiert werden, da sie mit dem Träger (15) nicht in Kontakt kommen, und dass abgeschnittene Stücke (13) mit Längen von L und bis zu 2xL in Kontakt mit dem Träger (15) kommen und zur Einführungsseite (2) hin kippen, da L hier größer als L0 ist und zu einem Sammelfach (16) auf der Einführungsseite (2) hin transportiert wird, und dass abgeschnittene Stücke (13) mit Längen, die 2xL übersteigen, zu der Rückseite (9) hin kippen, da L hier kleiner als L0 ist und zu einem Sammelfach (17) auf der Rückseite (9) hin transportiert wird.

2. Verfahren nach Anspruch 1, **dadurch gekennzeichnet, dass** das abgeschnittene Stück (13), wenn es zu der Rückseite (9) der Plattenschere (1) hin bewegt wird, entweder festen Transportflächen (22) zu dem Sammelfach (17) auf der Rückseite (9) hin folgt oder alternativ lose angebrachten, geneigten Gleitflächen (28) folgt, die zwischen dem Träger (15) und einer Sammelpalette (25), die hinter der Maschinenschere (1) aufgestellt ist, eingesetzt sind.

3. Verfahren nach Anspruch 1, **dadurch gekennzeichnet, dass** der weitere Transport aus einem Sammelfach (16, 17) heraus einen manuellen Eingriff mit der Kante der abgeschnittenen Stücke (13) beinhaltet, wobei ein Benutzer seine Hand oder seine Finger zwischen die abgeschnittenen Stücke (13) und den Boden (19) des Sammelfaches einführt und die Platte aus dem Sammelfach (16, 17) heraushebt, da das Sammelfach sowohl auf der Einführungsseite (2) als auch auf der Rückseite (9) einen ebenen Boden (19) hat, der zu einer Transportfläche (21, 22) benachbart ist, wobei der Boden (19) in einem Winkel bezüglich der Transportfläche (21, 22) verläuft und ein aufrechter Endanschlag (18) mit dem Boden (19) verbunden ist, wodurch ein Raum zwischen dem Boden (19) und den abgeschnittenen Stücken (13) für den manuellen Eingriff bereitgestellt wird.

4. Verfahren nach Anspruch 1, **dadurch gekennzeichnet, dass** die abgeschnittenen Stücke (13), wenn es der Transportfläche (21) zu einem Sammelfach (16) auf der Einführungsseite (2) der Plattenschere (1) folgt, über einen Motor (6) und eine Antriebskonstruktion (7) zum Antreiben von mindestens einem der Messer in der Plattenschere (1) hinweggehen.

## Revendications

1. Procédé pour la récolte de chutes (13) d'une matière en plaque (10) découpée à partir d'une cisaille à tôle (I); dans lequel le bord avant (11) de la matière en plaque est inséré à partir d'un côté d'insertion (2) de la cisaille à tôle (1) entre une lame supérieure (3) et une lame inférieure (4), que l'on fait ensuite passer l'une devant l'autre pour la découpe de la matière en plaque (10) le long d'un bord arrière (12) des chutes (13) ; dans lequel les chutes (13) qui, depuis le bord avant (11) jusqu'au bord arrière (12) possèdent une longueur supérieure à la longueur L, après la découpe, sont récupérés par un dispositif de support transversal fixe (15) prévu parallèlement aux lames supérieure et inférieure (3, 4), mais à une distance prédéterminée L devant les lames supérieure et inférieure (3, 4); dans lequel la relation entre la longueur L et une longueur L0 des chutes détermine le fait de savoir si les chutes (13) basculent par-dessus le dispositif de support (15) en direction du côté d'insertion (2) de la cisaille à tôle, ou en direction du côté arrière (9) de la cisaille à tôle, puisque les chutes (13) basculent en direction d'un des deux côtés où est située la partie la plus longue et par conséquent la plus lourde des chutes ; dans lequel la longueur L0 est mesurée à partir du dispositif de support (15) en direction du bord avant (11) des chutes (13), la mesure étant réalisée sur les chutes (13) lorsqu'elles heurtent le dispositif de support (15); **caractérisé en ce que** les chutes (13) dont la longueur est inférieure à la longueur L sont toujours transportées en direction d'un compartiment de récolte (16) du côté insertion (2) de la cisaille à tôle (1) étant donné qu'elles n'entrent pas en contact avec le dispositif de support (15), et **en ce que** des chutes (13) dont les longueurs s'étendent de Ljusqu'à 2xL entrent en contact avec le dispositif de support (15) et basculent en direction du côté insertion (2), puisque la longueur L est en l'occurrence supérieure à la longueur L0 et sont transportés en direction d'un compartiment de récolte (16) du côté insertion (2) ; et **en ce que** des chutes (13) dont les longueurs dépassent 2xL basculent en direction du côté arrière (9), puisque la longueur L est en l'occurrence inférieure à la longueur L0, et sont transportées en direction d'un compartiment de récolte (17) du côté arrière (9).

2. Procédé selon la revendication 1, **caractérisé en ce que** les chutes (13), lorsqu'elles se déplacent en direction du côté arrière (9) de la cisaille à tôle (1), soit suivent des surfaces de transport fixes (22) en direction du compartiment de récolte (17) du côté arrière (9), soit en variante suivent des surfaces de glissement inclinées (28) légèrement en pente ascendante, insérées entre le dispositif de support (15) et une palette de récolte (25) qui est montée derrière la cisaille à moteur (1).

3. Procédé selon la revendication 1, **caractérisé en ce que** le transport ultérieur à l'extérieur d'un compartiment de récolte (16, 17) englobe une intervention manuelle du bord des chutes (13), dans lequel un utilisateur guide sa main ou ses doigts entre les chutes (13) et la base (19) du compartiment de récolte et soulève la plaque à l'écart du compartiment de récolte (16, 17) étant donné que le compartiment de récolte, à la fois du côté insertion (2) et du côté arrière (9), englobe une base plane (19) adjacente à une surface de transport (21, 22), la base (19) formant un angle par rapport à la surface de transport (21, 22), ainsi qu'une butée d'arrêt dressée (18) en liaison avec la base (19), si bien que l'on obtient un espace entre la base (19) et les chutes (13) pour l'intervention manuelle.

4. Procédé selon la revendication 1, **caractérisé en ce que** les chutes (13), lorsqu'elles suivent la surface de transport (21) en direction d'un compartiment de récolte (16) du côté insertion (2) de la cisaille à tôle (1) passent par un moteur (6) et une structure d'entraînement (7) pour entraîner au moins une des lames dans la cisaille à tôle (1).
